Europäisches Patentamt

European Patent Office

Office européen des brevets

(19)

(11) Publication number: **0 280 432**

**A2**

(12) # EUROPEAN PATENT APPLICATION

(21) Application number: **88301023.3**

(22) Date of filing: **08.02.88**

(51) Int. Cl.⁴: **C12H 1/00 , A47J 43/12**

(30) Priority: **11.02.87 GB 8703164**

(43) Date of publication of application:
**31.08.88 Bulletin 88/35**

(84) Designated Contracting States:
**DE FR GB IT**

(71) Applicant: **ARTHUR GUINNESS SON & COMPANY (DUBLIN) LIMITED**
**St. James's Gate**
**Dublin 8(IE)**

(72) Inventor: **Thomas, Cyril Eugene**
**5 Gleann na Smol**
**Blackrock Co. Dublin(IE)**

(74) Representative: **Walters, Frederick James et al**
**Urquhart-Dykes & Lord 91 Wimpole Street**
**London W1M 8AH(GB)**

(54) **Gasified beverage frothing apparatus.**

(57) Gasified beverage frothing apparatus has a dip tube (5) for insertion into a gasified beverage (33) which is to be frothed. A piston (7) in the tube (5) forms a chamber (9) which communicates with the beverage through a restricted orifice (30) and a port (31) having a non-return valve (32). On expansion of chamber (9), beverage is drawn in through the port (31) and on contraction of the chamber beverage is expelled through orifice (30) to be subjected to cavitation so that gas in solution in the beverage is liberated to form a head of froth. The piston (7) is biased by spring (14) to contract the chamber (9). Chamber (9) is expanded against spring (14) by manual rotation of a multi-lobe cam (15). As cam (15) rotates a cam follower (17) linked to the piston (7) is displaced on the cam to expand the chamber (9) until the follower (17) moves over a cam lobe to permit the chamber (9) to contract solely under the pressure of spring (14). Cam (15) is rotated by arcuate displacement of a lever (22) coupled thereto through a one-way drive system (25, 26) so that successive arcuate reciprocation of the lever successively rotates the cam for repeated expansions and contractions of the chamber (9).

FIG.2.

FIG.3.

## "Gasified beverage frothing apparatus"

### TECHNICAL FIELD & BACKGROUND ART

This invention relates to gasified beverage frothing apparatus.

Many beverages of the fermented kind such as beer, ale, lager and stout, and of the non-fermented kind such as the so-called soft drinks, mixers or minerals contain gas in solution which is intended to be liberated to provide a head of froth, a sparkling or effervescent effect and/or to generally improve the physical and chemical characteristics of the beverage. It is well known to gasify beverages with for example, carbon dioxide which is liberated from solution with the beverage in sufficient quantity during dispensing to provide what may be regarded as acceptable characteristics for some fermented beverages and for the majority of non-fermented beverages. The liberation of such carbon dioxide is readily achieved merely be turbulence of the beverage. For beverages which are gasified, for example with nitrogen, the liberation of the nitrogen is not so readily achieved and is certainly not achieved merely by turbulence as would result from pouring the beverage into a drinking vessel. The use of nitrogen gas in solution and/or for dispensing purposes is particularly desirable, especially for fermented beverages since the head which it forms (possibly with carbon dioxide which may be present) is of a creamy nature, has small uniform bubble size, is long lasting and has what may be regarded as a pleasing taste and mouth feel. The use of nitrogen in a mixture with carbon dioxide for dispensing purposes has hitherto mainly been restricted to the bulk dispensing of beverages from large volume containers (such as beer casks, kegs or barrels) and such dispensing is disclosed in our U.K. Patent No. 876,628. With bulk dispensing of a beverage containing nitrogen in solution it is essential that the beverage is subjected to excitation by which the gases in the beverage are liberated during draughting to assist in forming the head. This excitation can take many forms including a restrictor by which the beverage is subjected to cavitation to liberate the gas (for example as disclosed in our U.K. Patent No. 1,063,753) or ultrasonic vibration such as is disclosed in U.K. Patent No. 1,378,692. Because of the difficulties of liberating a gas such as nitrogen the use of this gas has generally been restricted, as aforementioned, to bulk dispensing systems while beverages which are dispensed from small volume receptacles such as beer or soft drink cans, bottles or cartons contain a gas such as carbon dioxide, sufficient proportions of which are readily liberated to provide what may be considered to be appropriate characteristics for the dispensed product.

To the discerning palate and particularly for fermented liquors, beverages dispensed from a bulk system with mixed gases of carbon dioxide and nitrogen are considered to have greater appeal and better characteristics to the head than the beverage when dispensed from a can or bottle solely with a readily liberated gas such as carbon dioxide. For this reason considerable research has been made into the provision of a bottled or canned beverage containing nitrogen in solution and the manner in which such beverage is dispensed so that it will have substantially the same characteristics as would be expected from that beverage when dispensed from a bulk system. A discussion of this research is disclosed in our British Patent No. 1,588,624 where there are disclosed several techniques by which the gas, particularly nitrogen, may be liberated to contribute to or form the head of froth on a beverage dispensed from a bottle or can. Although each of these techniques provides an acceptable product in the form of the beverage which is ready for consumption, it is believed that problems exist to improve the means by which the liberation of the gas from solution is effected, to improve the general presentation of such means, and to provide a means of liberating gas from solution in the beverage which liberation is unlikely to be influenced by an operatives or dispensers skill or lack of it; the solution of these problems is a primary object of the present invention.

### STATEMENT OF INVENTION & ADVANTAGES

According to the present invention there is provided gasified beverage frothing apparatus comprising an expandible chamber; means biasing the chamber to a contracted condition; a tube for dipping into a gasified beverage which is to be frothed; control means for expanding said chamber from its contracted condition and against the biasing means for drawing gasified beverage into the chamber through the tube from a beverage into which the tube is dipped, said control means comprising a rotatable cam which provides a reaction at a predetermined expanded condition of the chamber to permit said chamber to contract solely under its biasing means for expelling beverage from the chamber into the beverage into which the tube is dipped, and wherein excitation means is provided to which said expelled beverage is subjected to cause liberation of gas in solution from the expelled beverage for initiating the development of a froth or head on the gasified beverage into which the beverage from the chamber is expelled.

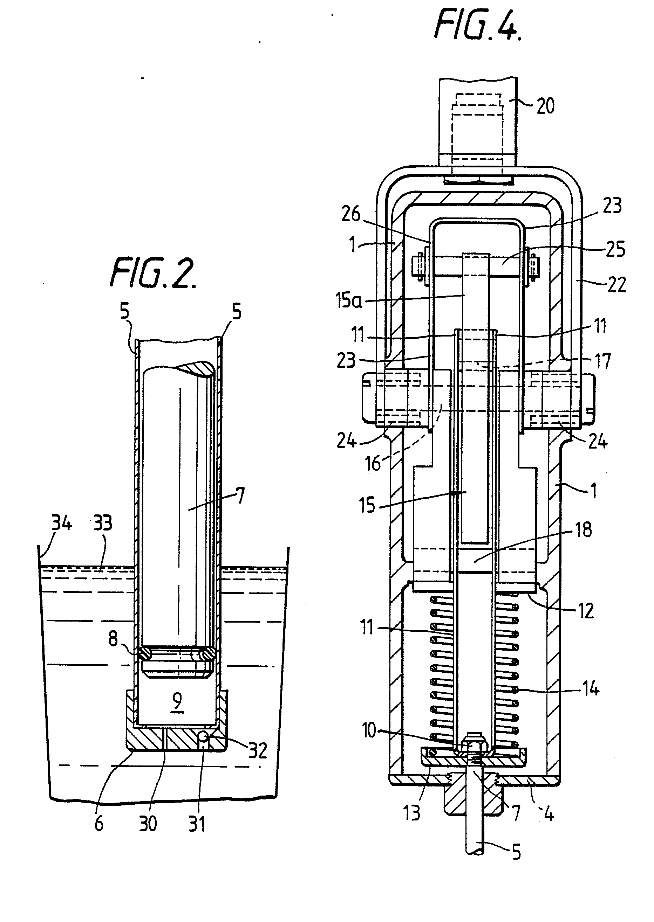

Preferably the cam is manually rotatable. It is also preferred that the beverage is expelled from the contracting chamber under the influence of the biasing means through the dip tube so that the dip tube conveniently carries the excitation means. The excitation means may be of a kind which satisfies the form of excitation of the beverage as discussed in our British Patent No. 1,588,624. Preferably however, the excitation means comprises one or more small channels or orifices in a nozzle on the tube and through which channel or orifice the beverage which is expelled from the chamber passes to be subjected to cavitation whereby gas in solution from the expelled beverage is liberated to seed or initiate the development of a froth or foam in the beverage into which it is expelled. In its preferred form therefore the apparatus of the present invention employs the principle of initiating and encouraging the evolution of dissolved gases in a beverage which is discussed in our British Patent 1,588,624 with particular reference to the embodiment of Figure 2; however by the present invention the control means for the expandible chamber into which the gasified beverage is drawn comprises a rotatable cam which causes a reaction when the expandible chamber has attained a predetermined expansion to permit that chamber to contract solely under the biasing means (which latter will usually be in the form of a spring).

By having a rotatable cam (which will usually be multi-lobed to present successive profiled cam surfaces which control successive expansions and contractions of the chamber) a predetermined arcuate rotation of the cam by an operative can cause predetermined expansion of the chamber, which chamber then automatically contracts as the cam is rotated to expel the beverage from the chamber under the pressure developed from the biasing means. The cam is conveniently rotated by a simple manually operated lever mechanism. This mechanism will preferably have a reciprocating action comprising a forward and reverse stroke (in the manner of a handle for a conventional beer dispensing pump) so that on the forward stroke the chamber is expanded against its biasing means and at or towards the end of that stroke a follower on the cam reacts to permit the chamber to contract solely under pressure from the biasing means to expel the beverage (which had previously been drawn into the chamber during the forward stoke). On the reverse stroke of the lever mechanism the cam may remain stationery as the cam follower resets through a ratchet or other one way drive system in readiness for a further forward stroke.

Throughout successive forward strokes it will be apparent that the pressure to which the beverage is expelled from the chamber will be the same for each expulsion and will be independent of the speed of operation of the apparatus or other external influence applied by the operator of the apparatus.

The apparatus of the present invention will usually be a compact bar mountable unit. The expandible chamber is conveniently located in the dip tube and partly formed by a piston which is reciprocable in the dip tube. The piston may be in the form of a rod carrying a follower for engagement with the cam to control displacement of the piston in the dip tube and which rod is spring loaded in a sense to contract the chamber. With this latter preference the end of the dip tube can carry a nozzle including a cavitation aperture through which the beverage is expelled. To facilitate the intake of beverage into the chamber the nozzle may include a port having a non-return valve through which beverage can be drawn rapidly into the chamber whilst alleviating the liberation of gas from the beverage during such intake.

In its preferred form of use the apparatus of the present invention will be applied for frothing or developing a head on a beverage dispensed into a glass or other form of vessel from "a package" as defined and discussed in our British Patent 2,089,322 while the beverage is preferably fermented such as a beer, ale, stout or lager as discussed in our British Patent 1,588,624.

DRAWINGS

One embodiment of a gasified beverage frothing apparatus will now be described, by way of example only, with reference to the accompanying illustrative drawings, in which

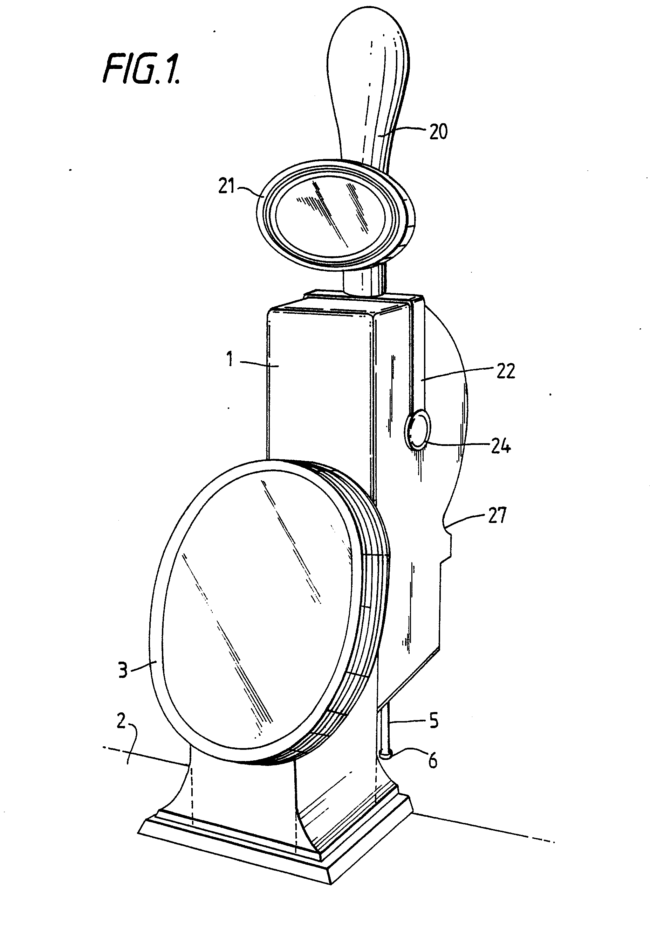

Figure 1 is a perspective view of the apparatus in the form of a bar mountable unit;

Figure 2 is a section through the dip tube of the unit showing the expandible chamber;

Figure 3 is a part section from a side of the unit, and

Figure 4 is a part section from an end of the unit.

DETAILED DESCRIPTION OF DRAWINGS

The unit illustrated comprises a housing 1 which can be mounted by clamps or otherwise on a bar counter 2 and has a convenient seating for an advertisement or display panel 3. Projecting downwardly from a bottom plate 4 of the housing and secured thereto is a cylindrical dip tube 5 on the bottom end of which is fitted a nozzle 6. Located within the tube 5 is a piston/piston rod 7 carrying an "O" ring seal 8 which forms, with the tube 5 and nozzle 6, a variable volume chamber 9 (see Figure 2).

The piston rod 7 extends upwardly from the dip tube 5 and projects through the bottom plate 4 to be bolted at 10 to a vertically displaceable lift frame 11. The lift frame extends upwardly through a partition plate 12 secured to the housing. Secured to the bottom end of the lift frame 11 for vertical displacement therewith is a pressure plate 13. Reacting between the plates 12 and 13 is a compression spring 14 which is arranged so that as the frame 11 is lifted within the housing 1 (and thereby the piston 7 is displaced upwardly in Figure 2 relative to the dip tube 5 to expand the chamber 9), the spring 14 is compressed to bias the piston rod 7 in a sense to contract the chamber 9.

The lift frame 11 is of generally "U" shape and between the opposed legs of this frame is located a multi-lobe cam 15. The cam 15 is rotatably mounted on a shaft 16 carried by opposed side walls of the housing 1 above the partition plate 12.

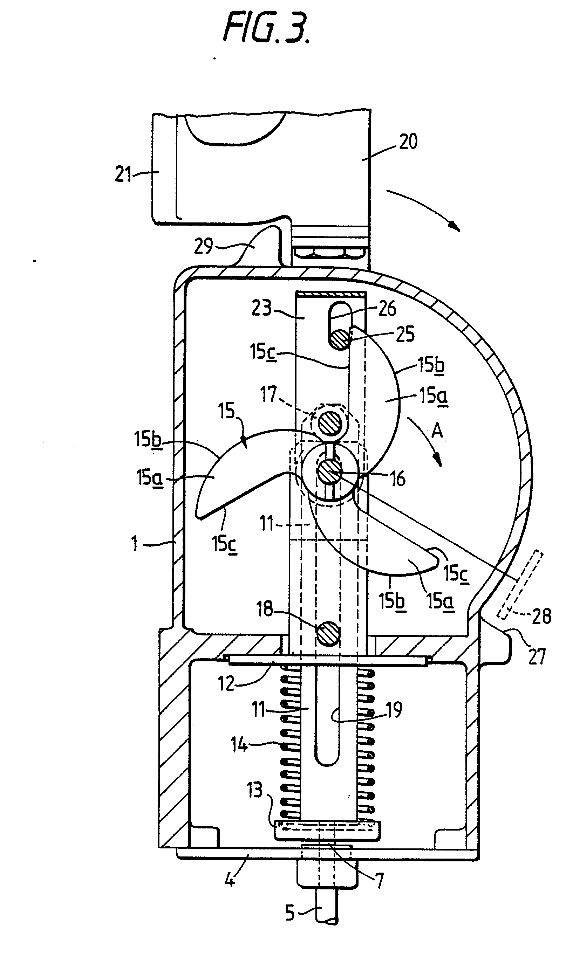

In the present example, the cam 15 has three radially expanding lobes 15a each with a similarly convexly profiled cam edge 15b and a generally radial straight edge 15c - the edges 15b and 15c are similarly orientated with respect to rotation of the cam on the shaft 16 and the edges 15c are disposed at 120° with respect to each other. Carried at the upper end of the lift frame 11 is a cam follower in the form of a roller 17 which is rotatably mounted between the legs of the frame 11 and urged into engagement with a cam profiled edge 15b by the biasing effect of the spring 14. From Figure 3 it will be seen that upon rotation of the cam 15 in the direction of arrow A, the cam edge 15b with which the roller 17 engages will cause the frame 11 and thereby the piston 7 to be lifted (while the cam follower 17 rotates as the edge 15b moves beneath it). During this lifting movement of the frame 11 the spring 14 is compressed as previously discussed. When the cam has rotated through 120° from the position shown in Figure 3, the lift frame is displaced to its uppermost position corresponding to a maximum expansion of the chamber 9 and the roller 17 moves off the upper or radially outer end of the cam edge 15b and on to the adjacent straight edge 15c. In this latter condition the edge 15c is substantially vertical as shown in Figure 3 so that the cam does not resist the cam follower and permits the lift frame 11 and piston 7 to be displaced downwardly to contract the chamber 9 solely under the biasing of the spring 14 until the roller 17 abuts the radially inner end of the profiled cam edge 15b of the adjacent following cam lobe 15a (as shown in Figure 3). By this arrangement it will be appreciated that successive rotations of the cam 15 through 120° will successively expand and contract the chamber 9 to a constant predetermined extent and ensure that the contraction is effected in response to a pressure which is predetermined from the spring 17. The frame 11 is stabilised within the housing 1 during its aforementioned lifting and lowering movements by the shaft 16 and by a pin 18 (that extends between opposed side walls of the housing 1) which pass through vertical slots 19 in the opposed legs of the "U" frame 11.

The cam 15 is rotated in the direction of arrow A sequentially through the 120° movement as aforementioned by a one way drive mechanism which comprises an operators lever/handle 20 (conveniently carrying an advertisement plate 21). The handle 20 is secured to a "U" shaped bracket 22 which straddles the housing 1 with the ends of its legs rotatably mounted on the shaft 16. Located within the housing 1 is a "U" shaped drive bracket 23 which has its legs connected by couplings 24 to be rotatable in unison with the bracket and handle 22/20. The drive bracket 23 and handle bracket 22 are located in substantially the same plane and extend radially of the shaft 16. The drive bracket 23 straddles the cam 15 and towards its outer end radially remote from the shaft 16 carries a trip/drive pin 25. The pin 25 is radially displaced in the bracket 23 and relative to the shaft 16 in slots 26 which are provided in the opposed legs of the drive bracket 23. The trip/drive pin 25 is arranged so that when the handle is in a rearward position and the cam follower 17 is at the radially inner end of a profiled cam edge 15b as shown in Figure 3, the pin 25 will be located in its slots 26 to abut an edge 15c of the cam lobe which immediately preceeds the cam roller 17 (in this position of the bracket 23 it will be seen that the slots 26 extend radially outwardly of the cam lobe 15a). When the handle 20 is moved clockwise in Figure 3 to rotate about the shaft 16, the drive frame 23 is rotated in unison with the handle and thereby the abutment of the pin 25 on the edge 15c causes the cam 15 to rotate in the direction of arrow A and the lift frame 11 to be lifted to expand the chamber 9. This latter rotation continues until the handle 20 abuts a stop 27 on the housing and the handle is at its maximum forward position as indicated at 28. This latter position corresponds to the cam follower 17 moving from the profiled edge 15b of a cam lobe to the following straight edge 15c of that lobe for contraction of the chamber 9 to occur.

The handle 20 is now displaced anti-clockwise in Figure 3 from its forward position 28 to its rearward position as shown (and which is conveniently determined by a stop 29 on the housing).

During this reverse stroke with the drive frame 23 moving in unison with the handle, the pin 25 will abut the profiled edge 15b of the adjacent uppermost cam lobe and thereby be displaced along its slots 26 to ride over the edge 15b of that lobe. Immediately before the handle 20 attains its rearward position the pin 25 rises to trip over the radially outermost end of the uppermost cam lobe and falls to attain the position shown in Figure 3 in readiness for a further expansion and contraction of the chamber 9.

The nozzle 6 on the dip tube 5 includes a small orifice 13 through which beverage from the chamber 9 is intended to be expelled and a relatively large port 31 having a non-return or ball valve 32 by way of which beverage is intended to be drawn into the chamber 9.

In use of the apparatus for promoting the development of a head of froth on a beverage containing gas in solution (such a beverage conveniently being as discussed in our British Patent No. 1,588,624) the beverage 33 may be poured from a can or bottle into a drinking glass 34 and the tube 5 dipped into the beverage as shown in Figure 2. With the handle 20 in its rearward position as shown in Figure 3 and the chamber 9 in its contracted condition, the handle 20 is rotated to its forward position 28 thereby expanding the chamber 9 to cause beverage 33 to be drawn into that chamber primarily through the port 31 and thereafter permitting the chamber 9 to contract rapidly under the force of the biasing spring 14. During this latter contraction the ball valve 32 closes port 31 and beverage from the chamber 9 is expelled by way of aperture 30. In passing through the aperture 30 the beverage is subjected to cavitation and gas therein comes out of solution and this acts to initiate and encourage evolution of the dissolved gas or gases from the beverage in the glass 34 by the "seeding" effect as discussed in our British Patent No. 1,588,624. It will be appreciated from the aforegoing that the actual expulsion of the beverage from the chamber 9 is achieved solely by the action of the biasing spring 14 and is thereby independent of an operatives skill in handling the apparatus.

For promoting the development of a head of froth on a fermented beverage such as stout having nitrogen and carbon dioxide gases in solution as discussed in our British Patents 876,628 and 1,588,624, the development of a pressure in the order of 200 to 240 p.s.i. on the beverage in the chamber 9 has been found quite practical and effective.

## Claims

1. Gasified beverage frothing apparatus comprising an expandible chamber; means biasing the chamber to a contracted condition; a tube for dipping into a gasified beverage which is to be frothed; control means for expanding said chamber from its contracted condition and against the biasing means for drawing gasified beverage into the chamber through the tube from a beverage into which the tube is dipped, said control means comprising a rotatable cam which provides a reaction at a predetermined expanded condition of the chamber to permit said chamber to contract solely under its biasing means for expelling beverage from the chamber into the beverage into which the tube is dipped, and wherein excitation means is provided to which said expelled beverage is subjected to cause liberation of gas in solution from the expelled beverage for initiating the development of a froth or head on the gasified beverage into which the beverage from the chamber is expelled.

2. Apparatus as claimed in claim 1 and comprising a cam follower which moves over a profiled cam surface of the cam during its rotation and such movement successively expands the chamber from its contracted condition and thereafter permits the chamber to contract under its biasing means.

3. Apparatus as claimed in claim 2 in which the cam is multi-lobed to present successive similarly profiled cam surfaces over which the cam follower successively moves during rotation of the cam to control successive and similar expansions and contractions of the chamber.

4. Apparatus as claimed in any one of the preceding claims in which the cam is manually rotatable.

5. Apparatus as claimed in claim 4 in which rotation of the cam is controlled by a reciprocating lever mechanism coupled to rotate the cam through a one way drive system, the lever mechanism having a forward stroke and a reverse stroke and being arranged with the drive system so that on the forward stroke the cam rotates and the chamber is expanded against the biasing means and by the end of that forward stroke the cam reacts to permit the chamber to contract under the biasing means and on the reverse stroke the lever mechanism is displaced relative to the cam and is positioned for a further forward stroke.

6. Apparatus as claimed in claim 5 when appendant to claim 3 in which the lever mechanism is arcuately displaceable and comprises a trip member which is arcuately displaceable with the lever mechanism and co-operates with the cam surfaces, and wherein said trip member engages with the cam surface of one lobe during a forward arcuate stroke of the lever mechanism to rotate the cam for a successive expansion and contraction of the chamber and on a reverse arcuate stroke the trip member moves out of engagement with said one lobe and into engagement with the cam surface of the adjacent following lobe and during said reverse stroke the trip member rides over the cam surface of the following lobe to reset for a further forward stroke.

7. Apparatus as claimed in any one of the preceding claims in which the biasing means comprises a spring which is energised during rotation of the cam to expand the chamber and, upon said reaction at a predetermined expanded condition of the chamber, acts to contract the chamber for expelling beverage therefrom.

8. Apparatus as claimed in any one of the preceding claims in which the expansion and contraction of the expandible chamber is determined by a reciprocating piston and cylinder device.

9. Apparatus as claimed in any one of the preceding claims in which beverage from the contracting chamber is expelled by way of the dip tube into the beverage in which the tube is dipped.

10. Apparatus as claimed in claim 9 when appendant to claim 8 in which the dip tube forms the cylinder of the piston and cylinder device and the chamber is located in the dip tube, the piston reciprocating within the dip tube under control from the rotatable cam and biasing means.

11. Apparatus as claimed in any one of the preceding claims in which the excitation means comprises a restricted channel or orifice through which beverage from the contracting chamber is expelled to be subjected to cavitation for the liberation of gas from solution in the beverage.

12. Apparatus as claimed in claim 11 when appendant to either claim 9 or claim 10 in which the restricted channel or orifice is located in a nozzle of the dip tube.

13. Apparatus as claimed in any one of the preceding claims in which the expandible chamber has an inlet port with a non-return valve by way of which beverage is drawn into the chamber during its expansion.

14. Apparatus as claimed in claim 13 when appendant to claim 12 in which the inlet port and non-return valve are located in said nozzle.

15. Apparatus as claimed in any one of the preceding claims and in the form of a bar mountable unit.

FIG.1.

FIG.4.

FIG.2.

# FIG.3.